# FASCICULE DE BREVET EUROPEEN

(11) **EP 3 009 257 B1**
(45) Date de publication et mention de la délivrance du brevet: **18.03.2020**
(21) Numéro de dépôt: 15190141.0
(22) Date de dépôt: 16.10.2015
(51) Int. Cl.: B29C 65/50

(54) **PROCÉDÉ ET DISPOSITIF D'APPLICATION D'UN RUBAN ADHÉSIF SUR UN RAIDISSEUR**
VERFAHREN UND VORRICHTUNG ZUR ANBRINGUNG EINES KLEBEBANDS AUF EINEM VERSTEIFER
METHOD AND DEVICE FOR APPLYING AN ADHESIVE TAPE TO A STIFFENER

(30) Priorité: 16.10.2014 FR 1459942
(43) Date de publication de la demande: 20.04.2016
(73) Titulaire: Stelia Aerospace, 17300 Rochefort (FR)
(72) Inventeur: HAUW, Philippe, 80800 SAILLY LAURETTE (FR); MARHEM, Vincent, 62217 BEAURAINS (FR)
(74) Mandataire: Argyma

(56) Documents cités:
- EP-A1- 2 749 869
- DE-A1-102006 008 455
- FR-A1- 2 942 741

## Description

### DOMAINE TECHNIQUE GENERAL ET ART ANTERIEUR

La présente invention concerne la fabrication de panneaux structuraux, en particulier pour un fuselage d'aéronef. L'invention vise plus particulièrement la fixation d'une pluralité de raidisseurs sur un panneau structural afin de former un panneau dit « auto-raidi ».

De manière classique, un fuselage aéronautique comporte une pluralité de panneaux structuraux en matière composite qui sont assemblés ensemble. Chaque panneau structural comprend une paroi plane ou incurvée, généralement fine et connue de l'homme du métier sous la désignation de «peau», et une pluralité de raidisseurs structuraux fixés sur ladite paroi afin de former un panneau dit « auto-raidi » qui possède des caractéristiques mécaniques élevées, en particulier, en flexion, en torsion et en traction. Chaque raidisseur s'étend sensiblement longitudinalement et possède une section transversale ayant une forme en « Oméga » définissant une partie centrale de forme concave et deux parties latérales connues de l'homme du métier sous la désignation de « semelles » ou « bases ».

En pratique, lors de l'assemblage d'un panneau structural, les semelles d'un raidisseur sont fixées sur ladite paroi au moyen de colle. A cet effet, on met en œuvre un procédé d'encollage des deux semelles de chaque raidisseur. De manière connue, après assemblage, la paroi et les raidisseurs collés subissent une étape de cuisson afin de rigidifier l'ensemble. Le panneau structural peut ensuite être relié à un autre panneau afin de former une partie de fuselage d'un aéronef.

Ordinairement, le procédé d'encollage comprend une étape d'application manuelle par un opérateur d'un ruban adhésif sur chaque semelle des raidisseurs. De manière connue, un ruban adhésif protégé comprend un film collant double face, une première face et une deuxième face dudit film collant étant respectivement protégées par une première couche de protection et une deuxième couche de protection. Un tel ruban adhésif est par exemple connu sous la désignation commerciale « FM300 »

Pour appliquer ledit ruban adhésif, l'opérateur retire tout d'abord la première couche de protection afin de découvrir la première face collante du ruban adhésif et la positionner sur une semelle du raidisseur. Après positionnement, seule la deuxième couche de protection du ruban adhésif est visible.

Le procédé d'encollage comprend en outre une étape de chauffage manuel de la deuxième couche de protection du ruban adhésif de manière à augmenter la pégosité du film collant en contact avec ladite semelle. En pratique, l'étape de chauffage est mise en œuvre par l'opérateur au moyen d'un appareil du type fer à repasser qui est mis directement en contact avec la deuxième couche de protection du ruban adhésif.

Un tel procédé manuel présente de nombreux inconvénients. Tout d'abord, l'opérateur doit positionner manuellement un ruban adhésif sur chaque semelle du raidisseur. Pour assurer un collage des raidisseurs sur la paroi qui réponde aux exigences de fabrication, il est nécessaire que le positionnement soit précis, de l'ordre du millimètre. Une telle étape de positionnement est difficile et coûteuse à mettre en œuvre. Par ailleurs, le positionnement manuel d'un tel ruban adhésif sur une semelle peut générer des plis, ce qui présente un inconvénient. Enfin, la qualité de positionnement d'un ruban adhésif varie entre les différents opérateurs, ce qui présente un autre inconvénient.

L'étape de chauffage présente également des inconvénients. En théorie, l'appareil du type fer à repasser doit être déplacé par l'opérateur sur la deuxième couche de protection du ruban adhésif à une vitesse constante de manière à chauffer uniformément le ruban adhésif. En pratique, l'appareil du type fer à repasser est déplacé à une vitesse variable par l'opérateur et le ruban adhésif est chauffé de manière non uniforme. Il en résulte que le ruban adhésif présente une pégosité hétérogène, ce qui peut entraîner un défaut de collage (durée de chauffage trop faible) ou un endommagement du ruban adhésif (durée de chauffage trop importante).

Chaque panneau du fuselage ayant une forme tridimensionnelle, les raidisseurs possèdent des formes différentes et comportent des déformations géométriques du type « Déflexion, Twist et Virage » connues de l'homme du métier.

Il en résulte que les formes des semelles sont différentes d'un raidisseur à l'autre. Aussi, il est nécessaire de prévoir une collection de rubans adhésifs pour correspondre à la collection de semelles des raidisseurs. Autrement dit, il existe autant de rubans adhésifs prédécoupés que de semelles. En pratique, chaque ruban adhésif doit être fabriqué sur mesure, ce qui présente un inconvénient aussi bien en termes de coût que de logistique. La gestion de la collection de rubans adhésifs est d'autant plus complexe que chaque raidisseur comporte deux semelles différentes : une semelle droite et une semelle gauche.

Ainsi, lors du positionnement d'un ruban adhésif sur une semelle d'un raidisseur, l'opérateur doit choisir le ruban adhésif correspondant à une semelle prédéterminée d'un raidisseur déterminé. Ensuite, le ruban doit être positionné selon la bonne orientation et selon la bonne face sur ladite semelle. Toutes ces opérations doivent être menées avec précautions pour éviter toute erreur, ralentissant le procédé d'encollage.

De plus, du fait des contraintes de fabrication, il n'est pas possible d'obtenir un ruban adhésif prédécoupé de longueur supérieure à 1m en un seul morceau. Aussi, pour une semelle dont la longueur peut atteindre 4m, le ruban adhésif prédécoupé est livré sous forme de tronçons de longueur maximale d'1m. Il est donc nécessaire d'appliquer plusieurs tronçons de manière adjacente par semelle, ce qui présente des inconvénients aussi bien en termes de logistique (plus grand nombre de références, etc.) qu'en termes de coûts. En effet, le positionnement précis de deux tronçons adjacents est complexe et long à mettre en œuvre.

Enfin, les tronçons de ruban adhésif sont découpés d'après les dimensions théoriques des semelles des raidisseurs. En théorie donc, les tronçons ainsi découpés correspondent précisément à une semelle prédéterminée. En pratique, il apparaît des disparités entre les dimensions de raidisseurs d'une même référence du fait des contraintes de fabrication des raidisseurs, ce qui entraîne des défauts de collage.

On connaît dans l'art antérieur la demande de brevet DE102006008455A1 qui présente une méthode pour solidariser un raidisseur par application d'une couche adhésive et découpage. La demande de brevet FR2942741A1 enseigne un procédé de fabrication d'une pièce allongée par application d'une couche de matériau composite accolée à un ruban de support. La demande de brevet EP2749869A1 enseigne pour sa part une méthode d'inspection de structures en matériau composite au cours de leur fabrication.

L'invention a donc pour but de remédier à ces inconvénients en proposant un procédé d'application d'un ruban adhésif sur une semelle d'un raidisseur qui soit rapide, précis et simple à mettre en œuvre, en particulier, d'un point de vue logistique.

### PRESENTATION GENERALE DE L'INVENTION

A cet effet, l'invention concerne un procédé selon la revendication 1.

Grâce au procédé selon l'invention, l'application d'un ruban adhésif sur la semelle d'un raidisseur est automatique, ce qui rend l'application rapide et répétable. De même, l'application est précise et le risque d'erreur ou de défaut d'application est éliminé, répondant aux exigences de fabrication.

Le procédé étant automatique, la pénibilité de l'opérateur est réduite. De même, le temps d'application est considérablement réduit par rapport à une application manuelle. Enfin la logistique est améliorée et les pertes de ruban adhésif sont réduites grâce au découpage d'un rouleau de ruban adhésif. Le procédé d'application est réalisé de manière continue, c'est-à-dire, sans interruption, ce qui procure un gain de temps.

De manière préférée, l'étape de mesure du profil extérieur d'une portion de la semelle est mise en œuvre au cours de l'entraînement du raidisseur, ce qui permet de limiter la durée du procédé d'application.

De préférence, l'étape d'application dudit ruban adhésif sur la semelle du raidisseur est mise en œuvre au cours de l'entraînement du raidisseur. Ainsi l'application est automatique et le temps d'application est réduit.

De manière préférée, le procédé selon l'invention comprend une étape de chauffage de la semelle dudit raidisseur, ce qui permet d'améliorer l'adhérence du ruban adhésif sur la semelle. En outre, le risque d'endommagement du ruban adhésif est évité.

De préférence, l'étape de découpage dudit ruban adhésif est mise en œuvre au cours de l'entraînement du raidisseur. Il n'est avantageusement pas nécessaire de prévoir une étape d'entraînement spécifique du module de découpage.

L'invention concerne aussi un procédé d'application d'un ruban adhésif sur une semelle d'un raidisseur, chaque semelle s'étendant longitudinalement, le procédé comprenant :
- une étape d'entraînement d'amont en aval du raidisseur sur un chemin de circulation ;
- une étape de chauffage de la semelle dudit raidisseur et ;
- une étape d'application dudit ruban adhésif sur la semelle du raidisseur selon une pluralité de zones élémentaires d'appui.

Ainsi, de manière avantageuse, le ruban adhésif est appliqué de manière précise sur une semelle afin d'épouser ses déformations géométriques. En outre, l'étape de chauffage étant réalisée préalablement à l'étape d'application, il n'existe pas de risque d'endommagement de la semelle.

L'invention concerne en outre un dispositif d'application d'un ruban adhésif sur une semelle d'un raidisseur selon la revendication 5.

Grâce au dispositif selon l'invention, l'application d'un ruban adhésif sur la semelle d'un raidisseur est automatique, ce qui rend l'application rapide et répétable. De même, l'application est précise et le risque d'erreur ou de défaut d'application est éliminé, répondant aux exigences de fabrication.

Le dispositif étant automatique, la pénibilité de l'opérateur est réduite. De même, le temps d'application est considérablement réduit par rapport à une application manuelle.

De manière préférée, le module de mesure comprend au moins un système d'acquisition de profil, de manière avantageuse, sans contact du type caméra ou profilomètre. Il va de soi que le système d'acquisition de profil peut également se présenter sous la forme d'un système avec contact équipé de palpeurs. Dans le cas présent, le système d'acquisition de profil comporte une caméra adaptée pour prendre plusieurs photos de la semelle à la suite afin de faire un suivi du profil de la semelle d'un raidisseur lors de son entraînement.

De préférence, le module de découpage comprend au moins un fil de découpage, ce qui permet un découpage précis et rapide tout en autorisant des angles de découpage variés. De préférence, le fil de découpage est un fil diamanté.

De manière avantageuse, le module de découpage est adapté pour faire vibrer ledit fil de découpage, ce qui permet d'augmenter la vitesse d'avance du découpage, c'est-à-dire, la vitesse d'entraînement du raidisseur.

De préférence, le module de découpage est configuré pour orienter le fil de découpage perpendiculairement à la surface du ruban adhésif à découper. Ainsi, le découpage est plus précis et permet d'épouser toute forme de semelle de raidisseur afin de retirer les chutes de ruban adhésif.

De manière préférée, le dispositif comprend un module de gestion configuré pour mettre en œuvre un procédé de traitement d'image du profil extérieur mesuré pour déterminer un tracé de découpage. Ainsi le découpage s'adapte automatiquement à la semelle du raidisseur introduit dans le dispositif d'application.

L'invention concerne en outre un dispositif d'application d'un ruban adhésif sur une semelle d'un raidisseur, chaque semelle s'étendant longitudinalement, le dispositif comprenant :
- un module d'entraînement d'amont en aval d'un raidisseur selon un chemin de circulation ;
- un module de chauffage d'une semelle de raidisseur ; et
- un module d'application d'un ruban adhésif sur une semelle d'un raidisseur comportant un organe presseur équipé d'une pluralité d'appuis élémentaires.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un panneau structural comportant une paroi sur laquelle sont fixés des raidisseurs ;
- la figure 2 est une représentation schématique de la section transversale d'un raidisseur du panneau structural de la figure 1 ;
- la figure 3 est une vue en coupe d'un ruban adhésif pour la fixation d'un raidisseur à une paroi d'un panneau structural ;
- la figure 4 est une vue schématique d'un raidisseur sur lequel est appliqué un ruban adhésif ;
- la figure 5 est une vue schématique d'un dispositif d'application d'un ruban adhésif sur un raidisseur selon l'invention ; et
- la figure 6 est un organigramme schématique de la mise en œuvre d'un procédé d'application d'un ruban adhésif sur un raidisseur selon l'invention.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

L'invention va être présentée pour la fabrication d'un panneau structural d'un fuselage d'aéronef mais il va de soi que l'invention s'applique de manière générale à la fabrication de tout panneau structural.

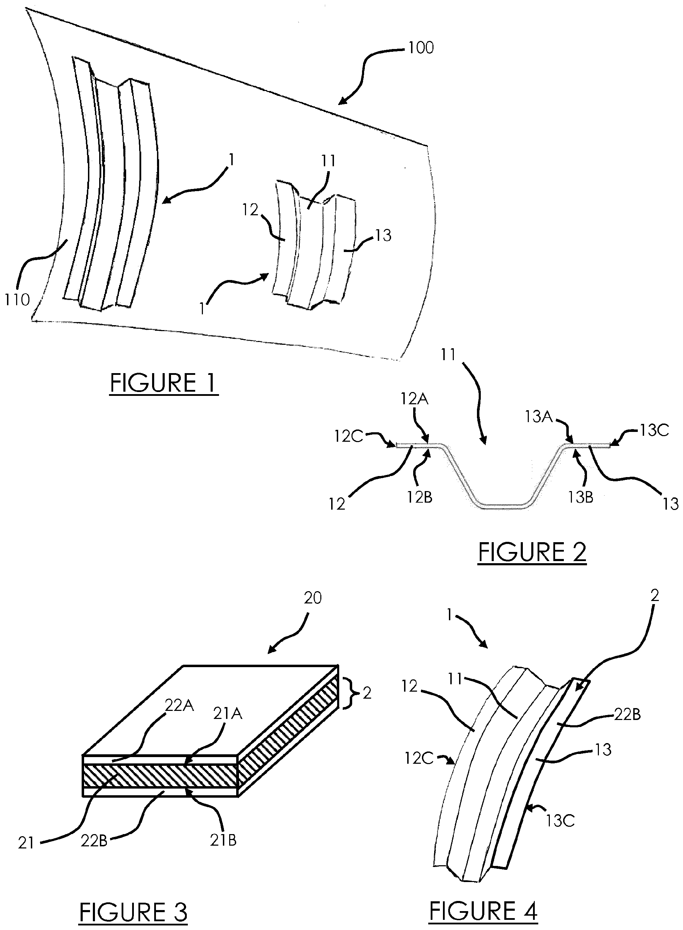

En référence à la figure 1, il est représenté de manière schématique un panneau structural 100 qui comporte une paroi incurvée 110, connue de l'homme du métier sous la désignation de « peau », et une pluralité de raidisseurs structuraux 1 fixés sur ladite paroi incurvée 110 afin de former un panneau dit « auto-raidi ». Un tel panneau « auto-raidi » possède des caractéristiques mécaniques élevées, en particulier, en flexion, en torsion et en traction. Les raidisseurs 1 ont une forme incurvée qui est adaptée pour être fixés sur la paroi 110 du panneau structural 100.

### Raidisseur 1

Comme illustré aux figures 1 et 2, chaque raidisseur 1 s'étend sensiblement longitudinalement et possède une section transversale ayant une forme en « Oméga » définissant une partie centrale 11 de forme concave et deux parties latérales 12, 13, connues de l'homme du métier sous la désignation de «semelles», qui sont respectivement désignées par la suite « semelle gauche 12 » et « semelle droite 13 » en référence à la figure 1. Lors de l'assemblage d'un panneau structural 100, les semelles 12, 13 d'un raidisseur 1 sont fixées sur ladite paroi 110 au moyen d'un ruban adhésif qui sera présenté par la suite.

Chaque panneau du fuselage 100 ayant une forme tridimensionnelle, les raidisseurs 1 possèdent des formes différentes et comportent des déformations géométriques du type « Déflexion, Twist et Virage » connues de l'homme du métier. Il en résulte que les formes des semelles 12, 13 sont différentes d'un raidisseur 1 à l'autre. De plus, les raidisseurs 1 possèdent généralement des longueurs différentes. De préférence, cette longueur peut varier entre 30cm et 4m.

En référence à la figure 2, chaque semelle 12, 13 s'étend depuis la partie centrale 11 du raidisseur 1 et comporte, à cet effet, un premier bord, dit intérieur, relié à ladite cavité 11 et un deuxième bord extérieur, dit profil extérieur ou libre. Comme illustré à la figure 2, la semelle gauche 12 comporte un profil extérieur 12C tandis que la semelle droite 13 comporte un profil extérieur 13C. De manière classique, la distance entre le bord intérieur et le profil extérieur d'une semelle 12, 13 est inférieure à 100 mm.

Toujours en référence à la figure 2, chaque semelle 12, 13 comporte une première face 12A, 13A adaptée pour recevoir un adhésif 2 (présenté par la suite) et une deuxième face 12B, 13B opposée à la première face 12A, 13A.

### Ruban adhésif protégé 20

En référence à la figure 3, un ruban adhésif protégé 20 comprend un film collant 21, de type double face, qui comporte une première face collante 21A et une deuxième face collante 21B. Les faces collantes 21A, 21B sont respectivement protégées par un premier film de protection 22A et un deuxième film de protection 22B qui sont amovibles. Dans cet exemple, le ruban adhésif protégé 20 se présente sous la forme d'un rouleau connu sous l'appellation «FM300» et dont la largeur peut atteindre 130 mm.

En pratique, le premier film de protection 22A est retiré afin de pouvoir découvrir la première face collante 21A et lui permettre d'adhérer à la première face 12A, 13A d'une semelle 12, 13. Par souci de concision et de clarté, le ruban adhésif protégé 20 dénué de son premier film de protection 22A est désigné «ruban adhésif 2» par la suite.

En ce qui concerne le deuxième film de protection 22B, celui-ci est retiré lors de l'assemblage du raidisseur 1 à ladite paroi 110 du panneau structural 100, c'est-à-dire, après le passage du raidisseur 1 dans le dispositif d'application 3 de l'invention.

Par la suite, il va être présenté un dispositif selon l'invention pour découper et appliquer le ruban adhésif 2 sur une semelle 12, 13 du raidisseur 1 comme illustré à la figure 4.

### Dispositif d'application 3

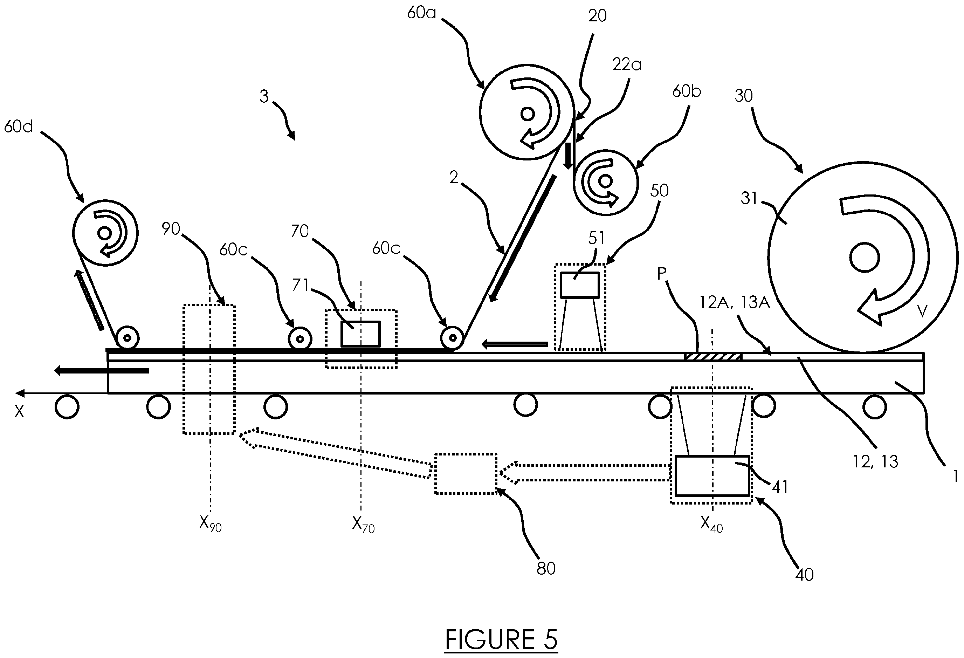

En référence à la figure 5, il est représenté de manière schématique un dispositif d'application 3 pour appliquer le ruban adhésif 2 sur une unique semelle 12, 13 d'un raidisseur 1, en particulier, sur sa première face 12A, 13A. Néanmoins, il va de soi que le dispositif d'application 3 pourrait également positionner un ruban adhésif 2 de manière simultanée sur les deux semelles 12, 13 d'un raidisseur 1.

Dans cet exemple, il va être présenté un procédé d'application du ruban adhésif 2 sur la semelle droite 13 du raidisseur 1.

Le dispositif d'application 3 comporte un module d'entraînement 30 apte à entraîner un raidisseur 1 d'amont en aval selon un chemin de circulation, un module d'approvisionnement 60 en ruban adhésif 2, un module de mesure 40 du profil extérieur 13C de la semelle 13 du raidisseur 1 afin de permettre la découpe ultérieure du ruban adhésif 2, un module de chauffage 50 du raidisseur 1 pour améliorer l'adhérence du ruban adhésif 2 sur une semelle 13, un module d'application 70 du ruban adhésif 2 sur la semelle 13 du raidisseur 1, un module de découpage 90 du ruban adhésif 2 et un module de gestion 80 apte à commander le module de découpage 90 en fonction du profil extérieur 13C mesuré par le module de mesure 40.

Chaque module du dispositif d'application 3 va dorénavant être présenté de manière détaillée.

### Module d'entraînement 30

En référence à la figure 5, le module d'entraînement 30 comporte une surface d'entraînement plane, appelée chemin de circulation, qui s'étend d'amont en aval selon l'axe X. De manière préférée, la surface d'entraînement plane comporte des rouleaux ou analogues pour limiter les frottements lors du déplacement du raidisseur 1.

Le module d'entraînement 30 comporte en outre une ou plusieurs roues d'entrainement 31 dont l'axe de rotation s'étend orthogonalement au chemin de circulation et dont la périphérie extérieure est configurée pour entrer en contact avec la partie centrale 11 du raidisseur 1. Dans cet exemple, le raidisseur 1 est entraîné « tête en bas » de manière à ce que la première face 13A de la semelle 13 soit orientée vers le haut, la roue d'entraînement 31 venant en contact avec la cavité de la partie centrale 11 du raidisseur 1. Dans cet exemple, la roue d'entraînement 31 est motorisée et possède une vitesse de rotation constante afin d'obtenir une vitesse d'entraînement ou d'avance de l'ordre de 10 à 50 mm/s.

De manière avantageuse, chaque raidisseur 1 est entraîné de manière précise sur le chemin de circulation afin de faciliter le chauffage, l'application et la découpe du ruban adhésif 2 sur le raidisseur 1 comme cela sera présenté par la suite.

### Module d'approvisionnement 60

Le module d'approvisionnement 60 permet de distribuer le ruban adhésif 2 afin qu'il soit appliqué et découpé au cours de l'entraînement d'un raidisseur 1. En outre, le module d'approvisionnement 60 permet de collecter le premier film de protection 22A du ruban adhésif protégé 20 ainsi que les chutes liées aux découpes. Le module d'approvisionnement 60 permet par ailleurs de contrôler les conditions de distribution du ruban adhésif 2, comme la vitesse et la tension.

En référence à la figure 5, le module d'approvisionnement 60 comporte une roue de distribution 60a dans laquelle est montée un rouleau de ruban adhésif protégé 20 et une roue de collection 60b reliée au premier film de protection 22A afin de découvrir le film collant 21 du ruban adhésif protégé 20. Pour rappel, le ruban adhésif protégé 20 dénué de son premier film de protection 22A est désigné «ruban adhésif 2» par la suite.

Le module d'approvisionnement 60 comporte en outre une pluralité de roues de guidage 60c pour assurer la planéité dudit ruban adhésif 2 lors de son application sur la semelle 13. En pratique, les roues de guidage 60c guident le ruban adhésif 2 sensiblement parallèlement au chemin de circulation du raidisseur 1 afin de faciliter une application précise du ruban adhésif 2 sur le raidisseur 1. Le module d'approvisionnement 60 comporte en outre une roue de récupération 60d adaptée pour collecter les chutes du découpage du ruban adhésif 2. Après le découpage du ruban adhésif 2, seule une partie du ruban adhésif 2 demeure appliquée sur le raidisseur 1, l'autre partie du ruban 2, désignée chute 26, est collectée par le module d'approvisionnement 60.

### Module de chauffage 50

Le module de chauffage 50 du raidisseur 1 permet d'augmenter l'adhérence du ruban adhésif 2 appliqué sur le raidisseur 1. Dans cet exemple, le module de chauffage 50 comprend une lampe de chauffage 51, de préférence de type infrarouge, qui est orientée sensiblement perpendiculairement au chemin de circulation de manière à la semelle 13 lors de son entraînement. Un tel chauffage est avantageux étant donné qu'une semelle 13 est traditionnellement de couleur foncée et possède donc une grande inertie thermique, ce qui faciliter son adhésion avec un ruban adhésif 2. Néanmoins, il va de soi que le module de chauffage 50 pourrait également chauffer de manière directe la première face collante 21A du ruban adhésif 2.

De manière préférée, le module de chauffage 50 comprend également des moyens de mesure de la température de la semelle 13 au cours de son chauffage, de préférence, sans contact. Dans cet exemple, les moyens de mesure se présentent sous la forme d'un pyromètre infrarouge. De manière avantageuse, le module de chauffage 50 permet de réguler la durée et l'intensité du chauffage en fonction de la température mesurée. Un tel module de chauffage permet d'éviter un défaut de collage du ruban adhésif 2 sur la semelle 13 (durée de chauffage trop faible) ou un endommagement du ruban adhésif (durée de chauffage trop important).

### Module d'application 70

Le module d'application 70 permet d'appliquer le ruban adhésif 2 sur la semelle 13 du raidisseur 1 afin qu'ils adhèrent ensemble. Le module d'application 70 comprend un organe presseur 71, en contact avec le deuxième film de protection 22B du ruban adhésif, qui est configuré pour contraindre le ruban adhésif 2 contre la première face 13A de la semelle 13. La première face collante 21A du ruban adhésif 2 est alors collée sur la première face 13A de la semelle 13.

De préférence, l'organe presseur 71 comporte une pluralité de billes permettant de rattraper les irrégularités de forme de la semelle 13. Autrement dit, l'organe presseur 71 permet de presser l'adhésif 2 selon une pluralité de zones élémentaires d'appui contre la semelle 13.

De manière préférée, les billes sont montées sur ressorts afin de se déplacer verticalement et de s'adapter aux courbures de la semelle 13. Ainsi, le module d'application 70 permet d'appliquer le ruban adhésif 2 sur la première face 13A de la semelle 13 malgré les déformations géométriques de la semelle 13.

En référence à la figure 5, le module d'application 70 est situé à la position longitudinale X₇₀ sur le chemin de circulation.

### Module de mesure 40

Le module de mesure 40 comprend au moins un système d'acquisition de profil, de manière avantageuse, sans contact du type caméra ou profilomètre. Il va de soi que le système d'acquisition de profil peut également se présenter sous la forme d'un système d'acquisition de profil avec contact équipé par exemple de palpeurs.

Dans cet exemple, le module de mesure 40, illustré à la figure 5, comprend une caméra vidéo 41 adaptée pour capturer des images de la semelle 13 du raidisseur 1 et les envoyer au module de gestion 80 qui sera présenté par la suite. De préférence, la caméra vidéo 41 est située sous le chemin de circulation et orientée perpendiculairement vers le haut afin de limiter l'encombrement du dispositif d'application 3. De préférence, la caméra vidéo 41 est configurée pour effectuer une mesure du profil extérieur 13C d'une portion P de la semelle 13 lors de l'entraînement du raidisseur 1.

En référence à la figure 5, le module de mesure 40 est situé à la position longitudinale X₄₀ sur le chemin de circulation, en amont du module d'application 70.

### Module de découpage 90

Le module de découpage 90 permet de découper le ruban adhésif 2 appliqué sur la semelle 13 du raidisseur 1. A cet effet, le module de découpage 90 comprend un fil de découpage (non représenté), en particulier, un fil de découpage serti de perles de diamant, également appelé fil diamanté, afin de permettre un découpage net. De préférence encore, le module de découpage 90 est adapté pour faire vibrer le fil de découpage afin d'améliorer la vitesse de découpage. Un fil diamanté mis en vibration présente une qualité de découpage optimale.

De préférence, le module de découpage 90 est adapté pour recevoir un tracé de découpage et définir le déplacement du fil de découpage associé audit tracé de découpage. Aussi, le module de découpage 90 comprend des moyens de guidage des deux extrémités du fil découpage afin de le déplacer et de l'orienter perpendiculairement au chemin de circulation du raidisseur 1 à la manière d'une scie à chantourner.

De manière alternative, le module de découpage 90 pourrait comprendre un cutter oscillant, un cutter fixe, une machine à ultrasons, un laser ou un fil chaud.

En référence à la figure 5, le module de découpage 90 est situé à la position longitudinale X₉₀ sur le chemin de circulation, en aval du module d'application 70.

### Module de gestion 80

Le module de gestion 80 permet, en particulier, de mettre en relation le module de mesure 40 et le module de découpage 90. Le module de gestion 80 comprend au moins un calculateur pour traiter les images reçues du module de mesure 40. A cet effet, le calculateur met en œuvre un procédé de traitement d'images pour calculer un tracé de découpage à partir desdites images. En particulier, le procédé de traitement d'images comporte des étapes de seuillage et de filtrage afin de déterminer le tracé de découpage 81 à partir du profil extérieur d'une portion P de la semelle 13 du raidisseur 1.

Il a été présenté une méthode de traitement d'images pour générer un tracé de découpage mais il va de soi que les module de gestion 80 est adapté pour générer un tracé de découpage en fonction des données issues du module de mesure (profilomètre, palpeur, etc.).

### Mise en œuvre

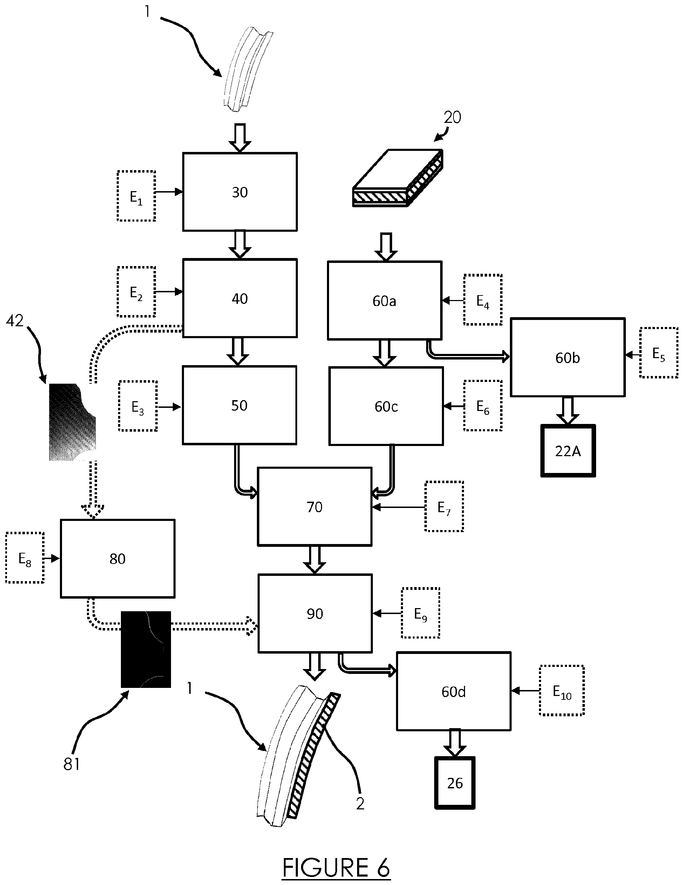

Dans la suite de la description, en référence aux figures 5 et 6, il va être présenté un procédé d'application du ruban adhésif 2 sur la semelle droite 13 du raidisseur 1 au moyen d'un dispositif d'application 3 selon l'invention. L'application du ruban adhésif 2 sur la semelle gauche 12 est similaire et ne sera pas présentée par souci de concision.

Dans cet exemple, un rouleau de ruban adhésif protégé 20 est monté dans le module d'approvisionnement 60 et est prêt à être appliqué. De manière avantageuse, l'utilisation d'un rouleau permet d'appliquer un même ruban adhésif sur plusieurs semelles de formes différentes comme cela sera présenté par la suite.

Lors de l'activation du dispositif d'application 3, la roue d'entraînement 31 entre en mouvement et est en attente d'un raidisseur 1 à entraîner selon le chemin de circulation. Un opérateur vient ensuite introduire un raidisseur 1 « tête en bas » à l'entrée du dispositif d'application 3 en posant la deuxième face 13B de la semelle droite 13 sur le chemin de circulation afin que la roue d'entraînement 31 entre en contact avec la cavité de la partie centrale 11 du raidisseur 1. Le procédé d'application comporte ainsi une étape d'entraînement E1 du raidisseur 1 de manière automatique à une vitesse d'entraînement V le long du chemin de circulation selon l'axe X comme illustré à la figure 5.

Le procédé d'application comporte en outre une étape de mesure E2, à la position X₄₀ du chemin de circulation, dans laquelle la caméra 41 prend une image 42 d'une première portion P de la semelle droite 13 du raidisseur 1 alors que celui-ci est entraîné sur le chemin de circulation. La caméra 41 est orientée verticalement au chemin de circulation et permet de visualiser de manière optimale le profil extérieur 13C de ladite première portion P. La visualisation est d'autant plus précise que la semelle droite 13 est dépourvue de ruban adhésif 2. Une image de chaque portion P consécutive de la semelle droite 13 est prise par ladite caméra 41 afin de prendre des images de toute la semelle 13. Par souci de clarté et concision, il ne sera présenté que l'application de l'adhésif 2 pour la première portion P, l'application de l'adhésif sur les autres portions s'en déduisant.

En référence à la figure 6, l'image 42, prise par ladite caméra 41, est transmise au module de gestion 80 afin que ce dernier réalise une étape de traitement comme cela sera détaillé par la suite.

Toujours en référence à la figure 6, le procédé d'application comporte une étape de chauffage E3 du raidisseur 1 par la lampe de chauffage 51 préalablement à l'application de l'adhésif 2. Un tel chauffage du raidisseur 1 permet d'assurer un collage homogène sans endommager le ruban adhésif 2. De plus le chauffage du raidisseur 1 est plus rapide et moins énergivore qu'un chauffage du ruban adhésif 2 du fait de la meilleure inertie thermique du raidisseur 1.

Parallèlement, le procédé d'application comporte :
- une étape de distribution E4 de ruban adhésif 2, dans laquelle la roue de distribution 60a entre en mouvement afin de dérouler le ruban adhésif protégé 20,
- une étape de collection E5, par la roue de collection 60b, du premier film de protection 22A de manière à découvrir la première face collante 21A afin que celle-ci soit prête à être appliquée sur la semelle droite 13 du raidisseur 1 ; et
- une étape de guidage E6 du ruban adhésif 2 par les roues de guidage 60c parallèlement au chemin de circulation selon l'axe X, c'est-à-dire, de manière sensiblement parallèle à la première face 13A de la semelle droite 13.

De telles étapes d'approvisionnement du ruban adhésif 2 permettent des manipulations automatiques du ruban adhésif 2, sans risques pour l'opérateur.

Afin de lier l'adhésif 2 à la semelle droite 13 du raidisseur 1, le procédé d'application comporte une étape d'application E7 dans laquelle une portion du ruban adhésif 2, guidée entre deux roues de guidage 60c de manière sensiblement parallèle au chemin de circulation, est appliquée sur la première face 13A de la portion P de la semelle droite 13 par l'organe presseur 71. De manière préférée, le ruban adhésif 2 est entraîné à une vitesse d'entraînement sensiblement égale à celle de la semelle droite 13 étant donné qu'il est collé à cette dernière.

Les billes montées sur ressorts de l'organe presseur 71 permettent de rattraper les irrégularités de forme de la semelle droite 13. Autrement dit, le cylindre presseur 71 permet d'assurer localement la planéité du ruban d'adhésif 2 sur la première face 13A de la semelle droite 13. Un tel procédé d'application permet avantageusement d'appliquer le ruban adhésif 2 sans plis malgré les irrégularités de forme de la semelle droite 13.

Parallèlement à l'étape d'application E7, le procédé d'application met en œuvre une étape de traitement E8 dans laquelle le calculateur du module de gestion 80 met en œuvre un procédé de traitement d'images pour calculer un tracé de découpage 81 à partir de l'image 42 envoyée par la caméra 41. Le module de gestion 80 envoie ensuite le tracé de découpage 81 au module de découpage 90. En pratique, l'étape de traitement E8 pour obtenir un tracé de découpage 81 est relativement longue à mettre en œuvre. De manière avantageuse, l'étape de traitement E8 est réalisée parallèlement à l'étape d'application E7 afin que celle-ci soit réalisée en temps masqué. De manière avantageuse, le procédé d'application peut ainsi être réalisé en continu, sans interruption.

A la position X₉₀ du chemin de circulation, le procédé d'application comporte une étape de découpage E9 du ruban adhésif 2 appliqué sur la première portion P de la semelle 13. Le fil de découpage suit le tracé de découpage 81 envoyé par le module de gestion 80 afin de découper le ruban adhésif 2 conformément au profil 13C de la portion P de la semelle droite 13.

Une telle étape de découpage du ruban adhésif 2 après application dudit ruban 2 sur la semelle 13 assure un positionnement précis du ruban adhésif 2 sur la semelle 13 et un découpage sur mesure sans interruption. Le découpage du ruban adhésif 2 correspondant au profil 13C mesuré préalablement assure une parfaite correspondance entre le profil de découpe du ruban adhésif 2 et le profil extérieur 13C de la semelle droite 13, quelles que soient les tolérances de fabrication de la semelle droite 13.

Afin de s'assurer que l'étape de découpage E9 soit mise en œuvre lorsque la première portion P de la semelle droite 13 est à la position aval X₉₀, celle-ci est réalisée après un temps prédéterminé T et suit à l'étape de mesure E2, le temps prédéterminé T étant fonction de la vitesse d'entraînement V et la distance entre la position aval X₉₀ et la position amont X₄₀.

En pratique, le tracé de découpage est tout d'abord calculé dans un référentiel de mesure du module de mesure 40 puis transformé dans un référentiel de découpage du module de découpage 90. Grâce à ce changement de référentiel, la position de chaque portion de la semelle droite 13 est parfaitement déterminée.

Suite à l'étape de découpage E9, une partie du ruban adhésif 2 demeure appliquée sur le raidisseur 1 tandis que l'autre partie du ruban adhésif 2, désignée chute 26, demeure libre. Le procédé d'application comporte une étape de collection E10 dans laquelle la roue de récupération 60d entre en mouvement afin d'enrouler les chutes 26 et former un rouleau de chutes.

En sortie du dispositif d'application 3, le raidisseur 1 est récupéré par un opérateur, le raidisseur 1 ayant sa semelle droite 13 recouverte d'un adhésif 2 sur mesure. Pour appliquer un adhésif 2 sur la semelle gauche 12 du raidisseur 1, il suffit à l'opérateur de placer le raidisseur 1 à l'entrée du dispositif d'application 3 selon une orientation différente. De manière préférée, deux dispositifs d'application selon l'invention sont montés en série afin d'appliquer chacun un ruban adhésif 2 sur une semelle du raidisseur 1. Ainsi, de manière avantageuse, il n'est plus nécessaire à l'opérateur de manipuler un raidisseur 1 dont la longueur peut être de l'ordre de 4m.

Pour monter le raidisseur 1 sur un panneau structural, il suffit à l'opérateur de retirer, de préférence manuellement, le deuxième film de protection 22B de chaque adhésif 2 avant d'appliquer les faces découvertes contre ledit panneau structural.

Grâce à l'invention, le dispositif automatique d'application 3 permet d'appliquer de manière homogène et répétable un ruban adhésif 2 sur un raidisseur 1. De plus, le temps d'application est considérablement réduit par rapport à une application manuelle, ce qui présente un avantage pour une mise en œuvre industrielle. En outre, le risque d'erreur ou de défaut d'application est éliminé. L'utilisation d'un rouleau de ruban adhésif 2 au lieu de tronçons adhésifs prédécoupés améliore la logistique et diminue les pertes. Enfin, la pénibilité des opérateurs est diminuée.

## Revendications

1. Procédé d'application d'un ruban adhésif (2) sur une semelle (12, 13) d'un raidisseur (1), chaque semelle (12, 13) s'étendant longitudinalement et comportant un profil extérieur (12C, 13C), le procédé comprenant :
- une étape d'entraînement (E1) d'amont en aval du raidisseur (1) sur un chemin de circulation ;
- une étape de mesure (E2) du profil extérieur (12C, 13C) d'une portion (P) de la semelle (12, 13) du raidisseur (1) à une première position (X₄₀) dudit chemin de circulation ;
- une étape d'application (E7) dudit ruban adhésif (2) sur la semelle (12, 13) du raidisseur (1) ; puis
- une étape de découpage (E9) dudit ruban adhésif (2), à une deuxième position (X₉₀) dudit chemin de circulation située en aval de la première position (X₄₀), en fonction dudit profil extérieur (12C, 13C) mesuré
de manière à ce que le ruban adhésif (2) soit appliqué de manière précise sur la semelle (12, 13) afin d'épouser ses déformations géométriques.

2. Procédé selon la revendication 1, dans lequel l'étape de mesure (E2) du profil extérieur (12C, 13C) d'une portion (P) de la semelle (12, 13) est mise en œuvre au cours de l'entraînement (E1) du raidisseur (1).

3. Procédé, selon l'une des revendications précédentes, comportant une étape de chauffage (E5) de la semelle (12, 13) dudit raidisseur (1).

4. Procédé, selon l'une des revendications précédentes, dans lequel l'étape de découpage (E9) dudit ruban adhésif (2) est mise en œuvre au cours de l'entraînement (E1) du raidisseur (1).

5. Dispositif (3) d'application d'un ruban adhésif (2) sur une semelle (12, 13) d'un raidisseur (1), chaque semelle (12, 13) s'étendant longitudinalement et comportant un profil extérieur (12C, 13C), le dispositif comprenant :
- un module d'entraînement (30) d'amont en aval d'un raidisseur (1) selon un chemin de circulation ;
- un module de mesure (40) du profil extérieur (12C, 13C) d'une portion (P) d'une semelle (12, 13) d'un raidisseur (1) à une première position (X₄₀) dudit chemin de circulation ;
- un module d'application (70) d'un ruban adhésif (2) sur une semelle (12, 13) d'un raidisseur (1) ; et
- un module de découpage (90) d'un ruban adhésif (2), à une deuxième position (X₉₀) dudit chemin de circulation située en aval de la première position (X₄₀), en fonction dudit profil extérieur (12C, 13C) mesuré
de manière à ce que le ruban adhésif (2) soit appliqué de manière précise sur la semelle (12, 13) afin d'épouser ses déformations géométriques.

6. Dispositif selon la revendication 5, dans lequel le module de mesure (40) comprend au moins une caméra vidéo (41).

7. Dispositif selon l'une des revendications 5 à 6, dans lequel le module de découpage (90) comprend au moins un fil de découpage, de préférence un fil diamanté.

8. Dispositif selon la revendication 7, dans lequel le module de découpage (90) est adapté pour faire vibrer ledit fil de découpage.

9. Dispositif selon l'une des revendications 5 à 8, dans lequel le module de découpage (90) est configuré pour orienter le fil de découpage perpendiculairement à la surface du ruban adhésif (2) à découper.

10. Dispositif selon l'une des revendications 5 à 9, comportant un module de gestion (80) configuré pour mettre en œuvre un procédé de traitement d'image du profil extérieur mesuré (12C, 13C) pour déterminer un tracé de découpage (81).

## Patentansprüche

1. Anwendungsverfahren eines Haftbandes (2) auf einer Basisplatte (12, 13) eines Versteifers (1), wobei jede Basisplatte (12, 13) sich in Längsrichtung erstreckt und ein äußeres Profil (12C, 13C) umfasst, wobei das Verfahren umfasst:
- einen Antriebsschritt (E1) des Versteifers (1) auf einem Verkehrsweg von vorne nach hinten;
- einen Messschritt (E2) des äußeren Profils (12C, 13c) eines Abschnitts (P) der Basisplatte (12, 13) des Versteifers (1) in einer ersten Position (X₄₀) des genannten Verkehrsweges;
- einen Anwendungsschritt (E7) des genannten Haftbandes (2) auf der Basisplatte (12, 13) des Versteifers (1); dann
- einen Zuschneideschritt (E9) des genannten Haftbandes (2) an einer zweiten Position (X₉₀) des genannten Verkehrsweges, die nach der erste Position (X₄₀) angeordnet ist, in Abhängigkeit von dem genannten gemessenen äußeren Profil (12C, 13C), damit das Haftband (2) präzise auf der Basisplatte (12, 13) angewendet wird, um ihre geometrischen Verformungen anzunehmen.

2. Verfahren gemäß Anspruch 1, bei dem der Messschritt (E2) des äußeren Profils (12C, 13C) eines Abschnitts (P) der Basisplatte (12, 13) im Verlauf des Antriebs (E1) des Versteifers (1) angetrieben wird.

3. Verfahren gemäß einem der voranstehenden Ansprüche, umfassend einen Heizschritt (E5) der Basisplatte (12, 13) des genannten Versteifers (1).

4. Verfahren gemäß einem der voranstehenden Ansprüche, bei dem der Zuschneideschritt (E9) des genannten Haftbandes (2) im Verlauf des Antriebs (E1) des Versteifers (1) umgesetzt wird.

5. Anwendungsvorrichtung (3) eines Haftbandes (2) auf einer Basisplatte (12, 13) eines Versteifers (1), wobei jede Basisplatte (12, 13) sich in Längsrichtung erstreckt und ein äußeres Profil (12C, 13C) umfasst, wobei die Vorrichtung umfasst:
- ein Antriebsmodul (30) eines Versteifers (1) von vorne nach hinten gemäß einem Verkehrsweg;
- ein Messmodul (40) des äußeren Profils (12C, 13C) eines Abschnitts (P) einer Basisplatte (12, 13) eines Versteifers (1) in einer ersten Position (X₄₀) des genannten Verkehrswegs;
- ein Anwendungsmodul (70) eines Haftbandes (2) auf einer Basisplatte (12, 13) eines Versteifers (1); und
- ein Zuschneidemodul (90) eines Haftbandes (2) in einer zweiten Position (X₉₀) des genannten Verkehrsweges, die nach der ersten Position (X₄₀) angeordnet ist, in Abhängigkeit von dem genannten gemessenen äußeren Profil (12C, 13C), damit das Haftband (2) präzise auf der Basisplatte (12, 13) angewendet wird, um ihre geometrischen Verformungen anzunehmen.

6. Vorrichtung gemäß Anspruch 5, bei der das Messmodul (40) wenigstens eine Videokamera (41) umfasst.

7. Vorrichtung gemäß einem der Ansprüche 5 bis 6, bei der das Zuschneidemodul (90) wenigstens einen Zuschneidefaden, bevorzugt einen Diamantfaden umfasst.

8. Vorrichtung gemäß Anspruch 7, bei der das Zuschneidemodul (90) geeignet ist, um den genannten Zuschneidefaden zum Vibrieren zu bringen.

9. Vorrichtung gemäß einem der Ansprüche 5 bis 8, bei der das Zuschneidemodul (90) ausgestaltet ist, um den Zuschneidefaden lotrecht zur Oberfläche des zuzuschneidenden Haftbandes (2) auszurichten.

10. Vorrichtung gemäß einem der Ansprüche 5 bis 9, umfassend ein Verwaltungsmodul (80), das ausgestaltet ist, um ein Verfahren zur Bildverarbeitung des gemessenen äußeren Profils (12C, 13C) umzusetzen, um einen Zuschneideverlauf (81) zu bestimmen.

## Claims

1. A method for applying an adhesive tape (2) on a baseplate (12, 13) of a stiffener (1), each baseplate (12, 13) extending longitudinally and comprising an outer profile (12C, 13C), the method comprising:
- a step of driving (E1) from upstream to downstream the stiffener (1) on a travelling path;
- a step of measuring (E2) the outer profile (12C, 13C) of a portion (P) of the baseplate (12, 13) of the stiffener (1) at a first position (X₄₀) of said travelling path;
- a step of applying (E7) said adhesive tape (2) on the baseplate (12, 13) of the stiffener (1); and then
- a step of cutting (E9) said adhesive tape (2), at a second position (X₉₀) of said travelling path located downstream of the first position (X₄₀), according to said measured outer profile (12C, 13C) so that the adhesive tape (2) is accurately applied on the baseplate (12, 13) in order to fit its geometric deformations.

2. The method according to claim 1, wherein the step of measuring (E2) the outer profile (12C, 13C) of a portion (P) of the baseplate (12, 13) is implemented during the driving (E1) of the stiffener (1).

3. The method according to one of the previous claims, comprising a step of heating (E5) the baseplate (12, 13) of said stiffener (1).

4. The method according to one of the previous claims, wherein the step of cutting (E9) said adhesive tape (2) is implemented during the driving (E1) of the stiffener (1).

5. A device (3) for applying an adhesive tape (2) on a baseplate (12, 13) of a stiffener (1), each baseplate (12, 13) extending longitudinally and comprising an outer profile (12C, 13C), the device comprising:
- a module for driving (30) from upstream to downstream a stiffener (1) along a travelling path;
- a module for measuring (40) the outer profile (12C, 13C) of a portion (P) of a baseplate (12, 13) of a stiffener (1) at a first position (X₄₀) of said travelling path;
- a module for applying (70) an adhesive tape (2) on a baseplate (12, 13) of a stiffener (1); and
- a module for cutting (90) an adhesive tape (2), at a second position (X₉₀) of said travelling path located downstream of the first position (X₄₀), according to said measured outer profile (12C, 13C) so that the adhesive tape (2) is accurately applied on the baseplate (12, 13) in order to fit its geometric deformations.

6. The device according to claim 5, wherein the measuring module (40) comprises at least one video camera (41).

7. The device according to one of claims 5-6, wherein the cutting module (90) comprises at least one cutting wire, preferably a diamond wire.

8. The device according to claim 7, wherein the cutting module (90) is adapted to vibrate said cutting wire.

9. The device according to one of claims 5-8, wherein the cutting module (90) is configured to direct the cutting wire perpendicular to the surface of the adhesive tape (2) to be cut.

10. The device according to one of claims 5-9, comprising a managing module (80) configured to implement an image processing method of the measured outer profile (12C, 13C) in order to determine a cutting layout (81).
